# EUROPEAN PATENT APPLICATION

(11) **EP 1 241 851 A2**
(43) Date of publication of application: **18.09.2002**
(21) Application number: 01303170.3
(22) Date of filing: 03.04.2001
(51) Int. Cl.: H04L 29/06

(54) **A method and system to provide and manage secure access to internal computer systems from an external client**

(30) Priority: 16.03.2001 GB 0106477
(71) Applicant: Kleinwort Benson Limited, London EC3P 3DB (GB)
(72) Inventor: Tait, John King F., c/o Kleinwort Benson ltd., London EC3P 3DB (GB)
(74) Representative: Sharp, Alan Cooper

(57) **Abstract**

A method of providing and managing secure access to computer systems or resources from an external client, the method including the steps of a) receiving a message from the client at an authorisation module, b) requesting credentials from the client, c) sending the message and credentials to a session management module, d) checking the credentials of the client, and, if valid, issuing a ticket to the client, the ticket being valid for a plurality of trusted computer systems, e) receiving a further message together with said ticket from the client at the authorisation module, f) checking the validity of the ticket via the session management module, and g) passing the message and ticket to an impersonator module which provides secure communication between the client and the desired destination computer system or resource, the impersonator module also providing usage information to the session management module.

## Description

### FIELD OF THE INVENTION

The present invention relates to a method of providing and managing secure access to internal computer systems or resources from an external client. It also relates to a system for providing such access.

### BACKGROUND ART

In recent years, computer networks have been developed for connecting one computer to another or to allow computers to share peripherals. Messages sent over such a network must use a common communications protocol. Such networks can be essentially self-contained intranets, or extranets where the communications channels used are not controlled by a given entity. The Internet is an example of a world wide communications network linking computers and networks to one another. From the perspective of a single organisation, the Internet comprises networks that are extranets. An intranet on the other hand comprises a communications network to which access is controlled or restricted. An intranet operates over a physical network that is under the control of a given entity.

Communications over the Internet presently employ the Transport Control Protocol/Internet Protocol (TCP/IP), and data is sent in discrete packets having a format define by this protocol. Other protocols, such as Hypertext Transmission Protocol (HTTP) and File Transfer Protocol (FTP) are further refinements of the TCP/IP protocol. Resources, such as for example servers, program codes, files and web pages, are accessible via the Internet, and are given a universal resource locator or URL, which defines the resource, its location, and the protocol used to communicate with the resource.

An intranet can be connected to an extranet via a physical connection such as a modem and telephone line. A gateway comprising hardware and/or software is typically used to act as an entrance and exit to and from such an intranet. A gateway can also perform conversions between incompatible networks and formats.

Controlled or restricted access form an extranet to an intranet is desirable for maintaining security and integrity of an organisations data. Firewalls and web tunnels are two examples of methods of controlling access.

A firewall is hardware and/or software at the gateway which examines data packets to determine whether the packet should be forwarded to/from the intranet. The firewall identifies the destination or originating addresses to determine whether to forward a given data packet. For example a firewall may be configured to block data packets whose origin or destination is the Internet.

To allow a user to gain access to the Internet from an intranet protected by such a firewall, a proxy server can be installed on the intranet which has access both to the intranet and to the Internet. The server acts as a proxy to forward requests on behalf of, for example, a user. A proxy server forwards a message without modifying the content.

To allow access by an external source or client to an intranet, a reverse proxy server may be used, as disclosed in WO 98/31124 or WO 99/66384. This is a server which sits outside the intranet, and can communicate with a dedicated server inside the firewall. Such reverse proxy servers usually incorporate URL remapping so that the external client does not have access to the internal URL, as disclosed for example in US 6,081,900.

One example of the web tunnel approach to intranet access from an external source is disclosed in US 6,104,716.

Of course, access to an intranet will only be provided to external sources or clients who are trusted/authorised. A known way to provide trusted third party authentication for TCP/IP networks is the Kerberos protocol, described in Bruce Schneier's "Applied Cryptography", John Wiley and Sons, New York, Second Edition (1996), pages 566 to 571, incorporated herein by reference.

A Kerberos service, sitting on a network, acts as a trusted arbitrator, allowing a user to access different machines on the network. Kerberos shares a different secret key (such as an encrypted password) with each user, and knowledge of that secret key is proof of identity. In use, a client requests a ticket for a particular server from Kerberos. The ticket is sent to the client encrypted using the client's secret key. The client then presents this ticket to the server along with an authenticator. If the client's credentials are valid, the server lets the client have access to the service requested. A client requires a separate, dedicated ticket for each service.

A disadvantage of the known methods of providing and managing secure access to a computer system or resource from an external client, is that in order to access different intranets (through, for example, different firewalls) one must gain authentication from each intranet separately. This is wasteful of processing power, and makes access management and central billing for services difficult. The present invention provides a global solution enabling access to two or more intranets seamlessly to the user, whilst simplifying access management and billing.

### SUMMARY OF THE INVENTION

According to a first aspect of the invention there is provided a method as specified in claims 1 ― 3,

According to a second aspect of the invention there is provided computer apparatus as specified in claims 4 ― 7,

### BRIEF DESCRIPTION OF THE DRAWINGS

Embodiments of the invention will now be described, by way of example only, with reference to the accompanying schematic drawings, in which:-
Figure 1 shows a computer system according to the invention,
Figure 2 shows a tunnelling module according to the invention,
Figure 3 shows a part of the tunnelling module of Figure 2
Figure 4 shows a further part of the tunnelling module of Figure 2, and
Figure 5 shows a user management module according to the invention.

### DETAILED DESCRIPTION OF THE INVENTION

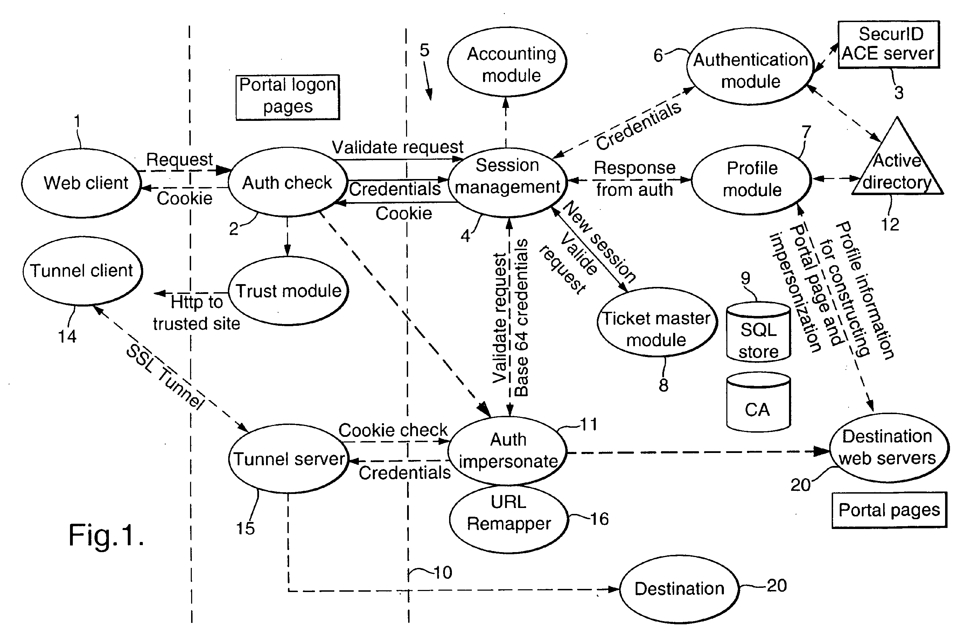

An overall view of the system is shown in Figure 1. All requests made to the system, for example by browsing by a client (1), will first be intercepted by a web filter called the authorisation check module (2). A web filter is a generic term used to describe a process that has the ability to filter and process incoming HTTP requests. The authorisation check module has the ability to intercept all HTTP incoming requests and perform a series of functions before either allowing the request to proceed or returning the request back to the user. As this the first request that has been made by the client, the client will not be presented a ticket or session ID at this stage. Instead, the client will be redirected to a set of portal logon pages, on a logon web server.

These portal logon pages contain the initial pages which prompt the user for the authentication method required to logon to the portal. For example, this may be a page that prompts the user to select either user ID and password, a secure ID token, or an X 509 certificate, and then prompts a user for that information. Once the user has supplied these credentials, the authorisation check module passes them internally to a main session management module (4).

The authorisation check module passes the credentials across to the session management module, with the request for validation. One of the key objectives for the authorisation check module is that it will not let requests pass into the internal network (5) unless they have been validated. This zone is referred to as the authorisation zone, and is separated from the sessions manager module by a firewall (10). The session management module is not directly responsible for validating the credentials, and thus passes them to an authentication module (6). This authentication module has a number of hooks into the system that it will support credentials for. In the present case this will be a hook into an accessible RSA SecurlD ACE server (3), and a hook into the Active Directory (or any LDAPv3 store) (12) to obtain the public key of certificates.

The results of the authentication are passed back to the session management module. Providing that the credentials supplied were valid, the session management module creates a new session for this user/client and passes the session details to the profile management module (7). If validation fails, the request is returned to the logon web server as rejected.

The role of the profile management module is to ensure that a valid user profile exists for the client who is trying to logon. Communication with the profile management module also confirms a unique system ID for the user.

The results from the profile management module are passed back to the session management module. Providing a valid system user exists (i.e. the client has a valid user profile and is known to the system), the session management module passes the session details down to the Ticket Master module (8). This module stores the session in one of the available SQL repositories (9) (selection is based on a hash value of the session details to insure scalability), signs the session with a private key, and passes this information back to the session management module as a token, ticket or cookie containing the signed session details, which is returned to the authorisation check module, which returns the ticket or cookie to the client browser, and sends an HTTP 302 redirect in order to direct the user to the portal logon pages.

Once the client is logged on to the system as a user, ensuring that the user is valid for the entirety of the session involves a similar process. When the user sends a further request to the system, it is again intercepted by the authorisation check module (2). This time however, the authorisation check module detects that a cookie or ticket is being presented as part of the request. In order to validate the session details, the authorisation check module has to pass the request across to the session management module (4). The session management module again acts as an arbitrator with this request, and forwards the session details to the Ticket Master module (8). The Ticket Master module performs two checks: one to ensure the contents of the session details are valid; a second to check whether an existing session exists based on these details. The results of these two checks are returned to the session management module, which passes this information back to the authorisation check module. Providing the session is valid the request is allowed to continue.

The ticket includes two pieces of time information ― a refresh time and an expiry time. The refresh time is to allow the architecture the ability to refresh the ticket on a periodic basis without forcing the user to log on again. This helps protect against replay attacks. The ticket master module comprises two components - an array of ticket master machines and a number of shared storage areas to store all the tickets. This arrangement is beneficial because the subsystem can be load balanced ― i.e. the ticket storage and retrieval process does not have to be performed by the same ticket master machine each time.

The inbound request next gets forwarded to the impersonate module (11). This module is responsible for checking the validity of the session ID and impersonating the incoming user. In order to do this, the impersonate module passes the session details and the URL of the resource that the user is trying to access to the session management module. The system makes two authentication checks. The authorisation check module first validates the session, before allowing the request to be proxied. The impersonate module re-checks the session details before processing the request.

This re-check is necessary as it confirms that the session is valid. Although there is a level of trust for the session management module, it is insecure to trust the components within the authorisation system. If processes were hijacked within the authorisation system it would not be acceptable for any false requests to be treated as trusted, hence a second validity check is made. Once the validity of the session has been confirmed, the session management module performs an indexed search in the profile management module, which includes an Active Directory 12 (or LDAPv3 store) against the URL that the user is trying to access. Once this has been found, the following items are extracted:-
a. Has the validated user been granted access to the specified URL resource?
b. If so, what username and password should be used to log her onto this resource?
Provided the answer to the first question is yes, the username and password are extracted from the Active Directory (using a Microsoft component called SPRITE) and passed to the session management module.

The session management module then creates a Base 64 encoded header based on the user credentials, and returns these to the impersonate module, which writes the HTTP authorisation header with these details before the request is forwarded to the destination host or resource.

The impersonate module 11 can work alongside a URL remapping module 16 as a web filter.

In general, the destination host or resource (20) will be behind a dedicated firewall. Once the user is logged onto the system they have the option of creating a tunnel connection through the firewall. The tunnelling module (14, 15) will now be described in more detail.

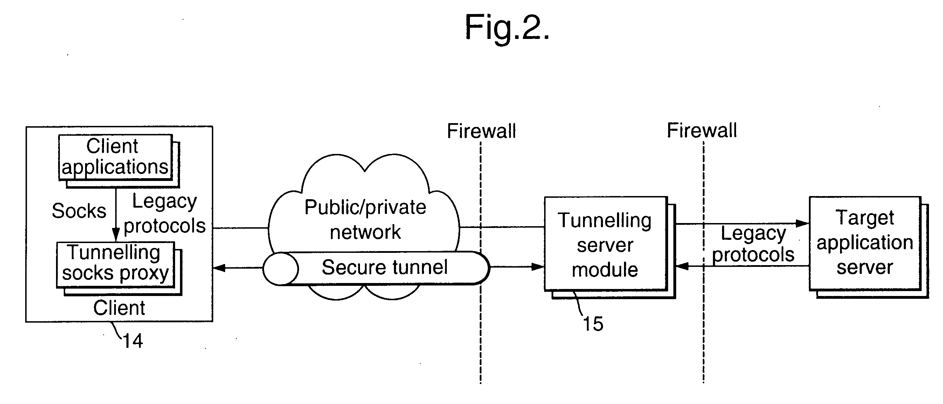

Known tunnelling techniques can be employed. However, an improved tunnelling module has been developed for the present invention. This is shown schematically in Figure 2, and uses three pieces of standards based technology, namely:
1. Client browser downloadable software objects,
2. SOCKS tunnelling protocols, and
3. The link between the tunnelling client and the tunnelling server can optionally be secured using the encryption protocol SSL (for example, version 3).

The client side component (14) has been developed as a downloadable software object that can be stored on a WEB server and downloaded on-demand to the client systems browser. The client component runs as a multitasking browser object either in the foreground or background of a browser window.

The SOCKS protocol is a robust and mature protocol which is supported by a number of applications and systems throughout the industry. Normally implemented as a means of a traversing firewall systems from within a corporate network to access resources out in the Extranet, this protocol is used within the present system to effect communication at the client side with SOCKS enabled applications, and as a communication protocol across the link between the tunnelling clients and the tunnelling server.

The SSL protocol is a robust and mature protocol which is supported by a number of products that implement secure communications across public and private networks. Specifically, the protocol is supported across most of today's standard proxy products that are used to grant internal users access to the Internet. Because traffic running across an SSL link is encrypted, there is limited scope for content checking by the proxy servers. We can therefore utilise SSL to set up none non-HTTP sessions through HTTP proxy servers and across the Internet. In other words, it is possible to fool the SOCKS compliant components into thinking that input legacy data (which is not compatible with HTTP) is an encrypted SSL datastream, and therefore transferable using the SOCKS/SSL protocols.

Security and authentication within the tunnelling environment is managed by session tickets generated from user credentials and the server system validating each connection request against an internal profile database, as described earlier.

The client side component (14) is implemented as a software object that is downloaded to the client's browser and executes either in the foreground or in the background within a browser window to emulate a local SOCKS V4 or V5 server that SOCKS ― enabled applications running on the client system can interface with. The client side component acts like a proxy, forwarding the SOCKS requests and traffic across a secure link to the server-side component that is actually processing the requests. The client side component can manage a number of concurrent SOCKS tunnelling sessions with the server component.

Communication between the client-side component (14) and the server-side component (15) are secured using the standard encryption protocol SSL v3. The client side component implements the client side of this protocol. The client component supports communication over the Internet via corporate proxy servers using the HTTP PROXY CONNECT command.

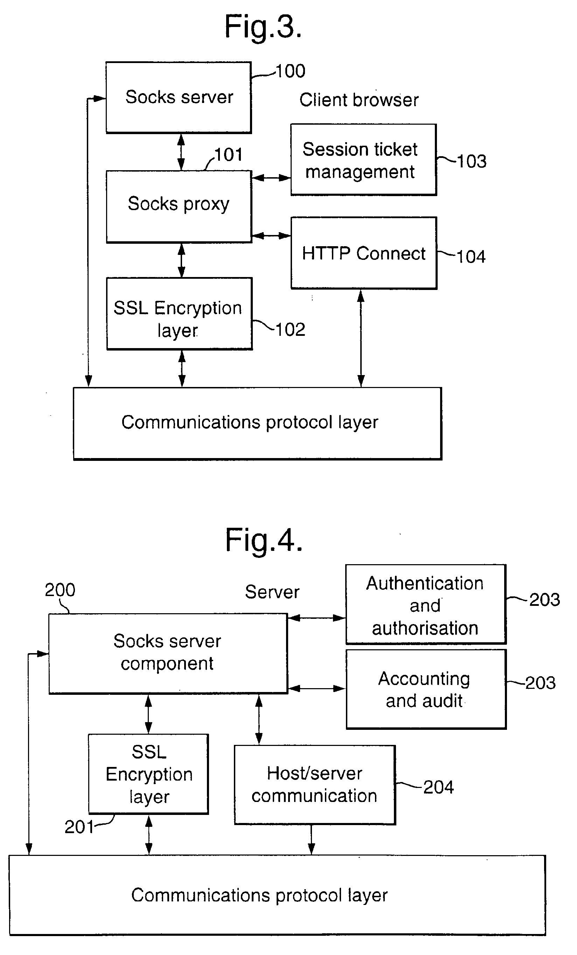

The client side component of the tunnelling module shown in Figure 3 comprises block 100 which denotes a client side SOCKS server component which is responsible for initialising the communication systems required to allow SOCKS enabled clients to connect to the client side SOCKS proxy component, denoted by block 101, described below. Component 100 connects to the underlying communications stack and opens a listening port that SOCKS enabled applications can then connect to. Component 100 is responsible for managing the connection requests from the SOCKS enabled clients. It will start up a new sub-task for each new connection. Control is then passed to the client side SOCKS proxy component (101) to manage the connection with the server side component.

Component 101 starts up the GUI interface that allows the user to monitor the SOCKS sessions when the component is running in the foreground. Once the communications channel has been set up it will forward connection initialisation requests and connect/bind requests to the server side component and will forward responses back to the client. This module proxies traffic between the client and the server via the SOCKS channel. It is also responsible for starting up the sub-task that will manage the session tokens that are used for session authentication ― it passes the authentication token to the server with each request for authorisation checking. When the SOCKS enabled client closes the SOCKS session, component 101 will take down the connections with the server side component, first terminating the SSL session if one was set up.

Block 102 denotes the SSL encryption layer component, which is responsible for managing initialisation, termination and encryption/decryption for the secure communications channels between block 101 and the server side component.

Block 103 denotes the session ticket management module. It is responsible for keeping the token fresh. It processes the tokens when the proxy client is downloaded and initialised.

Block 104 denotes the HTTP connect module, which is called when component 101 has to connect via a HTTP proxy. It opens up a communications channel with the HTTP proxy and requests a connection to the server side component using the HTTP CONNECT command.

The server side component (15) of the tunnelling module is a multitasking software object that is installed on a server within a secure area of an internal network. This component implements a subset of the SOCKS V4 or V5 protocol, and the server side of the SSL v3 protocol. It runs as a SOCKS V4/V5 server and can be configured to accept connections from normal SOCKS clients or the secure proxy clients described earlier. The server side component terminates the SOCKS and SSL sessions and manages communications with the target host and server systems. It can manage a number of concurrent SOCKS tunnelling sessions with clients, and maintains audit and accounting logs of requests being processed. It also manages authentication and authorisation for the connection requests being presented by the SOCKS clients. The server side component does not implement the standard authentication methods for SOCKS V4/V5 but uses a system of authentication tokens passed to it via the SOCKS proxy clients to authenticate users and authorise access to internal system and server resources.

The server side component (15) of the tunnelling module shown in Figure 4. It comprises the SOCKS server component 200, an SSL encryption/decryption module 201, a session ticket management component 203, and a host/server communications module 204 which sets up links with the target hosts/servers and processes traffic.

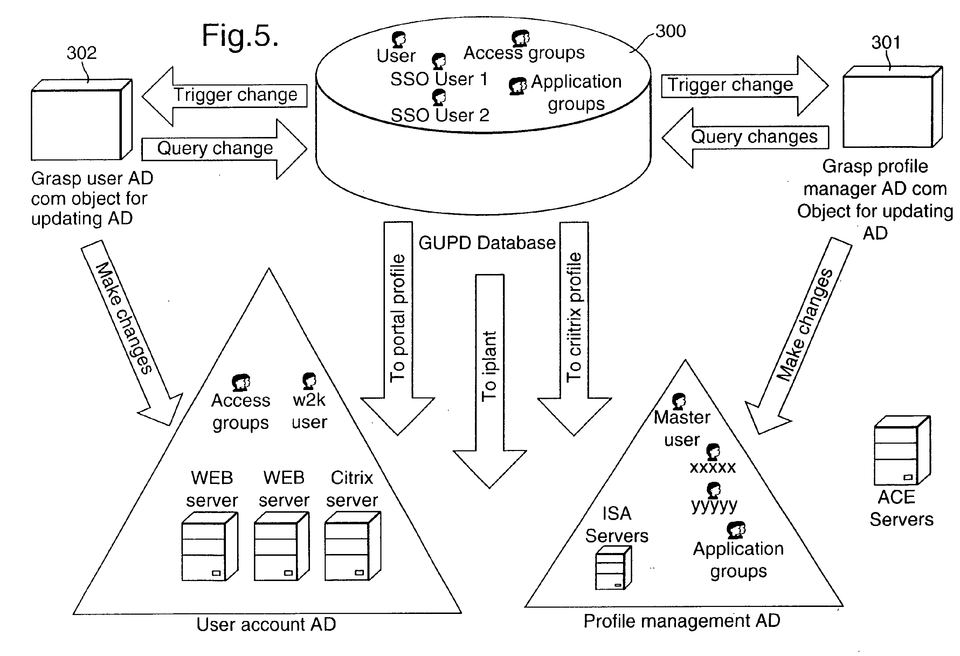

A diagram showing an overview of the function of each component when setting up and executing a tunnelling session is shown in Figure 5.

To ensure that the tunnel application is only valid whilst a user is logged in and to ensure that user credentials can be extracted to provide single sign on capabilities to tunnelled applications, the Tunnelling Server (15) communicates with the Session Management Module (4). As the Tunnel Client 14 is running within the context of a browser window, the Session Management Module has access to the cookie, ticket or token held by the client. The Tunnel Client passes this information to the Tunnel Server at frequent intervals during the lifetime of the tunnel. The Tunnel Server makes periodic calls against the Session Management Module to ensure that the cookie is still valid. If a value is returned indicating that the session is no longer valid (for example the user has signed off in another window or the session has expired), the Tunnel Server has the ability to take down the connection.

Of course, access to an internal resource or host will only be provided to external sources or clients who are trusted/authorised. A known way to provide trusted third party authentication for TCP/IP networks is the Kerberos protocol, described earlier. As an alternative, each site can have a list of other sites it trusts (such a trust can be set up using any methodology).

Such prior art trust schemes could be used for the present system. However the present embodiment provides an improved authentication trusts methodology in which the trustworthiness of an external computer system or resource is established using a cryptographic system in which the public key characteristic of the trusted internal computer system and the public key of the external destination computer system or resource are exchanged over a non-secure connection such as an extranet. This methodology enables trusts to be created between sites.

This is performed by the exchange of credentials between the Ticket Master modules of different sites. Once the credential exchange has been performed, the Ticket Master module from one site is able to validate session details (through the contents of the ticket, token or cookie) generated by another trusted site. Thus such a methodology enables the generation and use of multiuser tokens, tickets or cookies.

The issued cookie is then presented when the user visits a URL which is hosted from the trusted site. A trust module (that links with the Authorisation Check module) provides a secure way of one site communicating with a trusted site in order to update the tickets or cookies for a trusted user.

Known prior art authentication systems such as Kerberos all verify the ticket/token back to the central site, and then they hold information on that ticket/token in their systems that allows them to verify subsequent access requests using that ticket/token. The present invention uses the public key from the trusted site to verify the ticket. It is only necessary to go back to the central site when we get a trusted ticket/token that has to be refreshed. This improves scalability, because the present invention is not reliant on central ticket verification for all trusted sites.

In the absence of central site verification, some form of secure digital signature is required as in the present invention to discourage attack through impersonation.

The trust relationship between sites is set up through an exchange of root CA certificates and ticket master certificates that hold the ticket master public key chain. The ticket master modules in the trusted environments are then able to validate tickets from the trusted site in the same way that they validate their own tickets by checking the signature on the ticket.

Each ticket issued must be refreshed on a regular basis. This refresh must be done by the issuing session management system to ensure that the users session state is maintained. There are situations where the user may log on to the issuing site and not return there to get their ticket refreshed. To ensure that a correct session state is maintained, the trusted site must monitor the rotation period on the user's ticket and communicate back to the issuing site, without client intervention, to refresh the users ticket. This is the function of the trust module.

When the session management module of a trusted site recognises that a ticket is due to be refreshed it will instruct one of the authentication zone servers to communicate via the trust module with the ticket-issuing site, who will then issue a refreshed session ticket cookie. The trust module will issue an HTTP request to the issuing session management module, and the system will regenerate the session cookie and return it in an HTTP response. The trust module will return the refreshed cookie back to the session management module via the authentication zone servers.

The user manager module can be implemented as a separate stand alone working unit for other applications and application service providers (ASPs), or it can be integrated into a single system with the modules already described. Organizations seeking to centrally manage application distribution for many thousands or tens of thousands of users must undertake a large number of management tasks, including:-
user creation
application package creation
application upgrades and testing
application assignment to users
user permissioning
billing
application presentation
security
single sign on

A large corporation can expect to manage over 10,000 users with a portfolio of 400 or more applications, most of which will have 6 monthly update cycles. An average of 20 applications per user would create over 200,000 user assigned applications, each of which would need to be amended at least one or twice a year.

Simple ASP administration requires the creation and deletion of user assigned applications, amending the user assigned application when the application is updated, and then charging clients for the number of applications being used on a periodic basis. This produces a large amount of work, especially for an ASP with hundreds of thousands of users. Traditionally such systems have required a large administration and support team, which needs to grow at the same rate as the client base, hence negating a major benefit of the ASP model-namely reduced administration costs.

The user manager module seeks to mitigate this complexity and deliver cost savings. It offers client organizations the devolved ability to organize and administer ASP users. User application pairs can be created by individual users via a menu of available applications on their homepage. This information is stored securely so that billing can begin immediately. Doubling the number of users should not increase the number of ASP administrators.

The user management module is shown in Figure 5, and comprises a meta directory in the form of a global user profile database (300) which controls a plurality of LDAP compliant directories, such as for example Microsoft Active Directories, Netscape directory services and NDS. Typically, one of these LDAP compliant directories will already be present as part of the organizations existing administration scheme. In the present embodiment, the two LDAP directories are Microsoft Active Directory (AD) databases, namely the Profile Management AD (301) which manages access profiles, and the User Account AD (302), which manages resource access to, for example, Windows 2000 based services and applications. Using such a structure, one can view and edit one entry in the meta directory to manage or modify all of a given user's details in the plurality of LDAP compliant directories.

## Claims

1. A method of providing and managing secure access to computer resources from an external source, the method including the steps of :-
a) receiving a message from said external source at an authorisation check module,
b) requesting credentials from the external source,
c) sending the message and credentials to a session management module,
d) checking the credentials of the external source, and, if valid, issuing a ticket to the external source, the ticket being valid for a plurality of trusted computer systems,
e) receiving a further message together with said ticket from said external source at said authorisation check module,
f) checking the validity of the ticket via the session management module, and
g) passing the message and ticket to an impersonator module which provides secure communication between the external source and the desired destination computer system or resource, the impersonator module also providing usage information to the session management module.

2. A method as claimed in claim 1 in which secure access is provided to a plurality of trusted computer systems or resources.

3. A method as claimed in claim 2 in which the trustworthiness of each destination computer system or resource is established using a cryptographic methodology in which the public key characteristic of an internal computer system and the public key of the external destination computer system or resource are exchanged over a non-secure channel.

4. Computer apparatus connected to a network adapted to perform a method as claimed in claim 1.

5. Computer apparatus connected to a network adapted to perform a method as claimed in claim 2.

6. Computer apparatus connected to a network adapted to perform a method as claimed in claim 3.

7. Computer apparatus as claimed in claim 4, 5 or 6 including a user management module comprising a meta directory in the form of a global user profile database which controls a plurality of LDAP compliant directories.
